# EUROPÄISCHE PATENTSCHRIFT

(11) **EP 4 349 892 B1**
(45) Veröffentlichungstag und Bekanntmachung des Hinweises auf die Patenterteilung: **11.02.2026**
(21) Anmeldenummer: 22199658.0
(22) Anmeldetag: 04.10.2022
(51) Int. Cl.: C08J 7/04, B29D 7/01, C08J 7/043

(54) **BESCHICHTETE FOLIE**
COATED FILM
FILM REVÊTU

(43) Veröffentlichungstag der Anmeldung: 10.04.2024
(73) Patentinhaber: Pro Urbano Vertrieb GmbH, 51069 Köln (DE)
(72) Erfinder: Ludwig, Norbert J., 41470 Neuss (DE); Erhardt, Rainer, 50678 Köln (DE)
(74) Vertreter: Cohausz & Florack

(56) Entgegenhaltungen:
- EP-A2- 0 171 181
- EP-B1- 0 431 979
- HUA ZHOU ET AL: "Fluoroalkyl Silane Modified Silicone Rubber/Nanoparticle Composite: A Super Durable, Robust Superhydrophobic Fabric Coating", ADVANCED MATERIALS, vol. 24, no. 18, 8 May 2012 (2012-05-08), DE, pages 2409 - 2412, XP055695301, ISSN: 0935-9648, DOI: 10.1002/adma.201200184
- AMRUTKAR SHWETA ET AL: "Recent developments in the anti-graffiti coatings: an attentive review", JOURNAL OF COATINGS TECHNOLOGY AND RESEARCH, SPRINGER NEW YORK LLC, US, vol. 19, no. 3, 25 February 2022 (2022-02-25), pages 717 - 739, XP037892030, ISSN: 1547-0091, [retrieved on 20220225], DOI: 10.1007/S11998-021-00580-Z

## Beschreibung

Die vorliegende Erfindung betrifft eine beschichtete Folie zum Aufbringen auf eine Oberfläche für das erleichterte Entfernen von Graffiti, Farbe und Aufklebern von der Oberfläche, ein Verfahren zur Herstellung einer solchen beschichteten Folie, die Verwendung einer beschichteten Folie zur Verbesserung der Anti-Graffiti-, Anti-Haft- und/oder Abperl-Eigenschaften einer Oberfläche, und ein Verkehrszeichen, wobei mindestens auf der Vorderseite des Verkehrszeichens eine beschichtete Folie aufgebracht ist.

Verunreinigungen durch Graffiti, Farbverschmierungen, Filzschreiber und/oder Aufkleber (Sticker) auf Oberflächen, beispielsweise in Schultoiletten oder auf Verkehrszeichen, lassen sich zumeist nur sehr schwer und, wenn überhaupt, dann nur mit starken organischen Lösungsmitteln und/oder mit starkem mechanischen Aufwand entfernen. Gleichzeitig lassen sich viele dieser Oberflächen nicht ohne weiteres oder nur unter erheblichem Kostenaufwand und zusätzlichem Materialaufwand austauschen. Insbesondere bei Verkehrszeichen müssen solche Verunreinigungen jedoch zeitnah entfernt werden, da diese sonst ihre Gültigkeit verlieren. Kommunen und Straßenbaumeistereien müssen daher jedes Jahr erhebliche Kosten und Zeit aufwenden, um solche Verunreinigungen zu beseitigen. Da die Reinigung nur mittels organischer Lösungsmittel möglich ist, erfordert dies, dass geschultes Personal mit persönlicher Schutzbekleidung eingesetzt wird und die verwendeten organischen Lösungsmittel vollständig eingefangen und fachgerecht entsorgt werden. Aufgrund der sehr aufwendigen und kostenintensiven Reinigung wird daher in der Regel entschieden die Verkehrszeichen auszutauschen, da sich deren Reinigung nicht lohnt.

Aus dem Stand der Technik sind Schutzbeschichtungen mit Antihaft-Eigenschaften bekannt.

Die EP 3 075 790 A2 beschreibt eine Schutzlackierung für einen Gegenstand oder ein Objekt, insbesondere für ein Hinweisschild, wobei die Schutzlackierung als transparente außenseitige Oberflächenlackierung aufgebracht ist, dadurch gekennzeichnet, dass die Schutzlackierung eine Oberfläche mit unregelmäßig verteilten punktförmigen Erhebungen aufweist, wobei die Erhebungen durch in einer Lackschicht der Schutzlackierung angeordnete Partikel ausgebildet ist. Während eine solche Lackschicht gute Antihaft- Eigenschaften für Aufkleber aufweist, ist daran nachteilig, dass durch die Erhebungen eine zügige und vollständige Reinigung von Farbe durch Filzmarker und/oder Graffiti erschwert werden kann. Ferner ist zur vollständigen Reinigung von Farbe durch Filzmarker und/oder Graffiti der Einsatz von organischem Lösungsmittel erforderlich.

Die DE 101 16 158 A1 beschreibt ein Anzeigeschild oder eine Anzeigetafel, insbesondere Verkehrsschild oder Werbetafel, mit wenigstens einer Anzeigeseite, die mit einer Antihaftschicht aus Kunststoffmaterial mit antihaftenden Eigenschaften überzogen ist. Diese Antihaftschicht soll ein Anhaften von Schnee, Schmutz, Wasser und dergleichen verhindern, so dass die Gefahr vermieden wird, dass die Anzeigeinformation durch solche Einwirkungen nicht mehr erkennbar ist.

Hua Zhou et al. beschreiben in ihrem Artikel "Fluoroalkyl Silane Modified Silicone Rubber/Nanoparticle Composite: A Super Durable, Robust Superhydrophobic Fabric Coating", Advanced Materials, 2012, Band 24, Nr. 18, eine superhydrophobe Gewebebeschichtung aus einem vernetzten Polydimethylsiloxan-Elastomer, das gut dispergierte hydrophobe Siliziumdioxid-Nanopartikel und fluoriertes Alkylsilan enthält, und eine gute Beständigkeit gegen wiederholtes Waschen in der Maschine, starken Abrieb, starke Säuren oder Basen, kochendes Wasser oder Getränke und eine ausgezeichnete Fleckenbeständigkeit aufweist.

Amrutkar Shweta et al. beschreiben in ihrem Artikel "Recent developments in the anti-graffiti coatings: an attentive review", Journal of Coatings Technology and Research, 2022, Band 19, Nr. 3, verschiedene Anti-Graffiti-Beschichtungen, die nicht-permanent, semi-permanent oder permanent sind. Es wird ferner beschrieben, dass Beschichtungen, die Fluor- und Siliziumdioxid-Nanopartikel enthalten, besonders gute Anti-Graffiti-Eigenschaften besitzen.

Darüber hinaus sind im Stand der Technik bereits Schutzfolien oder Schutzbeschichtungen bekannt, die Anti-Graffiti Eigenschaften oder Abperl-Eigenschaften aufweisen.

In der Regel sind die aus dem Stand der Technik bekannten Schutzbeschichtungen zeit- und/oder kostenaufwändig in der Herstellung. Darüber hinaus ist die Reinigung der Oberflächen erschwert, da zumeist zumindest zum Ablösen der Farbe aus Filzmarkern und/oder Graffiti organische Lösungsmittel verwendet werden müssen.

Es ist im Stand der Technik bisher keine Schutzbeschichtung oder Schutzfolie bekannt, die gleichzeitig Anti-Graffiti-, Anti-Haft- und Abperl-Eigenschaften aufweist. Vor dem Hintergrund des genannten Standes der Technik lag der vorliegenden Erfindung die Aufgabe zugrunde, eine beschichtete Folie bereitzustellen, die einen oder mehrere der oben genannten Nachteile des Stands der Technik zumindest teilweise überwindet. Dabei soll eine erfindungsgemäße beschichtete Folie gleichzeitig AntiGraffiti-, Anti-Haft und Abperl Eigenschaften aufweisen. Insbesondere soll die erfindungsgemäße beschichtete Folie die Entfernung von Graffiti, Farbverschmierungen, Filzschreiber und Aufklebern (Stickern) von der Oberfläche deutlich erleichtern und einen im Vergleich zu Folien des Standes der Technik verbesserten Abperl-Effekt aufweisen, sowie einfach und kosteneffizient hergestellt werden können. Für bestimmte Ausführungsformen der erfindungsgemäßen beschichteten Folie, insbesondere zur Verwendung der beschichteten Folie auf Verkehrsschildern, soll eine erfindungsgemäße beschichtete Folie zudem transparent sein und die Reflexionseigenschaften einer darunterliegenden Schicht nicht beeinträchtigen. Schließlich soll die erfindungsgemäße transparente beschichtete Folie bei Anwendung im Freien witterungsbeständig und UVstabil sein, um die für die Verwendung auf Verkehrsschildern erforderliche CE Kennzeichnung zu erhalten sowie der "ÖNORUM" für Österreich und dem "RAL" Gütezeichen für Deutschland gerecht zu werden. Die erfindungsgemäße transparente beschichtete Folie soll insbesondere die für die Verwendung auf Verkehrszeichen gemäß RAL-GZ 628 (Ausgabe Mai 2010) erforderlichen Eigenschaften aufweisen.

Eine weitere Aufgabe der vorliegenden Erfindung war es, ein Verfahren bereitzustellen, mit dem die erfindungsgemäße beschichtete Folie mit den beschriebenen Eigenschaften hergestellt werden kann. Insbesondere soll das Verfahren schnell und kosteneffizient durchzuführen sein.

Diese Aufgaben werden erfindungsgemäß durch eine beschichtete Folie gemäß Anspruch 1, ein Verfahren gemäß Anspruch 8, einen Verwendung gemäß Anspruch 13, sowie eine Verkehrszeichen gemäß Anspruch 15 gelöst.

Vorteilhafte Ausgestaltungen der Erfindung sind in den abhängigen Ansprüchen angegeben und werden nachfolgend im Einzelnen erläutert.

Die Erfindung stellt eine beschichtete Folie zum Aufbringen auf eine Oberfläche für das erleichterte Entfernen von Graffiti, Farbe und Aufklebern von der Oberfläche bereit, umfassend eine Kunststofffolie und eine auf der Kunststofffolie angeordnete Beschichtung, wobei die Beschichtung einen vernetzten Liquid Silicone Rubber enthält und wobei die beschichtete Folie, auf der der Beschichtung abgewandten Seite der Kunststofffolie, eine Klebeschicht umfasst.

Überraschend hat sich gezeigt, dass die erfindungsgemäße beschichtete Folie die Entfernung von Graffiti, Farbverschmierungen, Filzschreiber und Aufklebern (Stickern) von einer damit ausgerüsteten Oberfläche erleichtert. Die Beschichtung der beschichteten Folie bildet dabei die äußerste, in Kontakt mit den Verschmutzungen stehende Schicht. Insbesondere lassen sich die zuvor genannten Verschmutzungen sehr leicht mechanisch und/oder mit Wasser wieder von der beschichteten Folie ablösen. Darüber hinaus haben Versuche gezeigt, dass eine erfindungsgemäße beschichtete Folie einen verbesserten Abperl-Effekt aufweist, sich also bei Regen oder hoher Luftfeuchtigkeit keine oder nur sehr kleine Wassertropfen an einer solchen Oberfläche absetzen, so dass die Sichtbarkeit nach den Vorgaben der Zertifizierungsbehörden für Verkehrsschilder nicht beeinträchtigt wird. Die Oberflächenspannung der erfindungsgemäßen beschichteten Folie weist dabei einen Wert von unter 20 mN/m gemessen nach DIN 53364 auf. Die erfindungsgemäße beschichtete Folie kann zudem einfach und kosteneffizient hergestellt werden und flexibel zur Ausrüstung verschiedenartigster Oberflächen, beispielsweise aus Metall, Kunststoffen, Holz oder Verbundwerkstoffen, verwendet werden.

Ohne an wissenschaftliche Theorien gebunden sein zu wollen, scheint sich die Kombination der vorteilhaften Eigenschaften der erfindungsgemäßen beschichteten Folie auf die Zusammensetzung der Beschichtung, insbesondere auf das Vorhandensein des vernetzten Liquid Silicone Rubber in der Beschichtung, zurückführen zu lassen. Die erfindungsgemäße beschichtete Folie umfasst eine auf einer Kunststofffolie angeordnete Beschichtung, wobei die Beschichtung einen vernetzten Liquid Silicone Rubber (LSR) enthält.

"Auf der Kunststofffolie angeordnet", wie hier verwendet, bedeutet, dass die Beschichtung sich entweder im vollflächigen Kontakt zur Kunststofffolie befindet oder zwischen der Beschichtung und der Kunststofffolie weitere Schichten vorhanden sein können.

Bevorzugt enthält die Beschichtung der erfindungsgemäßen beschichteten Folie den vernetzten Liquid Silicone Rubber, jeweils bezogen auf das Gesamtgewicht der Beschichtung, in einer Menge von mindestens 90 Gew.-%, insbesondere mindestens 95 Gew.-% oder mindestens 99 Gew.-%. Besonders bevorzugt besteht die Beschichtung der erfindungsgemäßen beschichteten Folie aus dem vernetzten Liquid Silicone Rubber.

Gemäß einer bevorzugten Ausführungsform enthält der vernetzte Liquid Silicone Rubber Polydimethylsiloxan, insbesondere enthält der vernetzte Liquid Silicone Rubber, jeweils bezogen auf das Gesamtgewicht des vernetzten Liquid Silicone Rubbers, mindestens 50 Gew.-%, insbesondere mindestens 60 Gew.-% oder mindestens 70 Gew.-% Polydimethylsiloxan.

Neben dem Polydimethylsiloxan kann der vernetzte Liquid Silicone Rubber bis zu 45 Gew.-%, bevorzugt bis zu 35 Gew.-%, besonders bevorzugt bis zu 25 Gew.-% Füllstoffe enthalten. Als Füllstoffe können die dem Fachmann für Liquid Silicone Rubber bekannten üblichen Füllstoffe eingesetzt werden. Darüber hinaus kann der Liquid Silicone Rubber bis zu 5 Gew.-%, bevorzugt 0,5 bis 5 Gew.-%, besonders bevorzugt 0,5 bis 1,5 Gew.-% Additive enthalten. Bevorzugt werden als Additive Vernetzer, Inhibitoren und/oder Katalysatoren eingesetzt. Besonders bevorzugt ist der Vernetzer ein Polymethylhydrogensiloxan und der Katalysator eine platinorganische Verbindung. Gemäß einer weiteren bevorzugten Ausführungsform ist der vernetzte Liquid Silicone Rubber ein vernetzter 2-Komponenten Siliconkautschuk, insbesondere ein vernetzter Raumtemperatur-vernetzender 2-Komponenten Siliconkautschuk.

Der vernetzte Liquid Silicone Rubber wird dabei vorzugsweise durch Vernetzung eines solchen Raumtemperatur-vernetzenden 2-Komponenten Siliconkautschuks erhalten. Entsprechende Liquid Silicone Rubber sind dem Fachmann allgemein bekannt und im Handel beispielsweise unter dem Handelsnamen ELASTOSIL^{®}RT der Wacker Chemie AG erhältlich.

Bevorzugt enthält die erste Komponente des 2-Komponenten Siliconkautschuks ein Polydimethylsiloxan mit vernetzbaren Endgruppen, bevorzugt Hydroxyl-, Amino-, Vinyl-, und/oder Silanolendgruppen, insbesondere Vinylendgruppen, und eine platinorganische Verbindung als Katalysator. Die dynamische Viskosität der ersten Komponente des 2-Komponenten Siliconkautschuks beträgt bevorzugt zwischen 4000 und 6000 mPas bestimmt bei 23°C nach ISO 3219.

Bevorzugt enthält die zweite Komponente des 2-Komponenten Siliconkautschuks ein Polymethylhydrogensiloxan, das die Rolle des Vernetzers übernimmt. Die zweite Komponente des 2-Komponenten Siliconkautschuks weist vorzugsweise eine dynamische Viskosität von 30 bis 50 mPas bestimmt bei 23 °C nach ISO 3219 auf. Der zweiten Komponente des 2-Komponenten Siliconkautschuks kann vor deren Mischen mit der ersten Komponente des 2-Komponenten Siliconkautschuks ein weiterer Vernetzer zugegeben werden, um die Aushärtung des 2-Komponenten Siliconkautschuks zu beschleunigen. Derartige Vernetzer sind dem Fachmann bekannt und im Handel beispielsweise unter dem Handelsnamen ELASTOSIL^{®} VERNETZER 525 erhältlich. Die Menge des zusätzlichen Vernetzers beträgt in der Regel zwischen 1 bis 5 Gew.-%, vorzugsweise zwischen 2 und 4 Gew.-%, bezogen auf das Gesamtgewicht der Mischung der ersten und zweiten Komponente des 2-Komponenten Siliconkautschuks. Bevorzugt handelt es sich bei dem der zweiten Komponente des 2-Komponenten Siliconkautschuks zusätzlich hinzugegebenen Vernetzer um ein Hydrogenpolysiloxan.

Der vernetzte Liquid Silicone Rubber wird bevorzugt durch Mischen der beiden Komponenten des 2-Komponenten Siliconkautschuks und Vernetzen erhalten. Das Mischungsverhältnis von der ersten zu der zweiten Komponente des 2-Komponenten Siliconkautschuks wird dabei vorzugsweise auf 9:1 eingestellt. Nach dem Mischen der beiden Komponenten weist die Mischung vorzugweise eine Topfzeit von mehr als 120 min, bevorzugt von mehr als 90 min auf. Durch Zugabe eines Inhibitors zur ersten Komponente des 2-Komponenten Siliconkautschuks vor dem Mischen mit der zweiten Komponente des 2-Komponenten Siliconkautschuks kann die Topfzeit auf 6 bis 8 Stunden verlängert werden. Für diesen Zweck geeignete Inhibitoren sind dem Fachmann grundsätzlich bekannt und im Handel erhältlich. Beispielsweise können die Wacker^{®} Inhibitoren PT67 und PT88 von Wacker eingesetzt werden. Die Menge des Inhibitors beträgt in der Regel zwischen 0,05 bis 0,08 Gew.-%, vorzugsweise zwischen 0,06 und 0,08 Gew.-%, bezogen auf das Gesamtgewicht der Mischung der ersten und zweiten Komponente des 2-Komponenten Siliconkautschuks. Durch Variation der Mengen an Inhibitor kann die Topfzeit verlängert oder verkürzt werden. Bei Erhöhung der Inhibitormenge wird die Topfzeit länger. Dies hat auch einen Einfluss auf die Härtungszeit, die sich dann ebenfalls verlängert. Durch Erhöhen der Temperatur lässt sich die Härtungsdauer bei gleichbleibender Menge an Inhibitor wieder signifikant verkürzen.

Gemäß einer besonders bevorzugten Ausführungsform wird der ersten Komponente des 2-Komponenten Siliconkautschuks vor dem Mischen mit der zweiten Komponente des 2-Komponenten Siliconkautschuks ein Inhibitor und der zweiten Komponente des 2-Komponenten Siliconkautschuks vor dem Mischen mit der ersten Komponente des 2-Komponenten Siliconkautschuks ein weiterer Vernetzer hinzugefügt, um die Topfzeit optimal einzustellen. Eine optimale Topfzeit im Sinne der Erfindung bedeutet, dass der 2-Komponenten Siliconkautschuk bei den weiter unten im Zusammenhang mit dem erfindungsgemäßen Verfahren genannten optimalen Vernetzungstemperaturen und - zeiten derart teilweise aushärtet, dass sich eine damit beschichtete Folie aufrollen lässt ohne zu Verkleben. Die vollständige Aushärtung des 2-Komponenten Siliconkautschuks erfolgt dann im bereits aufgerollten Zustand der beschichteten Folie.

Ferner kann der ersten und/oder zweiten Komponente des 2-Komponenten Siliconkautschuks ein Lösungsmittel zugegeben werden, um die Viskosität und/oder Verarbeitungseigenschaften für das Beschichten zu optimieren. Dabei kann der Lösemittelanteil bis zu 50 Gew.-% bezogen auf die Gesamtmenge der ersten und zweiten Komponente des 2-Komponenten-Silikonkautschuks betragen. Geeignete Lösungsmittel sind beispielsweise Xylol, Toluol, Testbenzin, Methylethylketon sowie Mischungen davon. Bevorzugt wird als Lösungsmittel eine Mischung von Methylethylketon und Testbenzin (Isopar^{™} E) im Verhältnis 1:2 eingesetzt. Die Lösungsmittel sollten derart ausgewählt werden, dass diese bei den für das Vernetzen des 2-Komponenten Siliconkautschuks eingesetzten Temperaturen idealerweise vollständig verdampfen. Es können geringe Reste an Lösungsmittel in der Beschichtung der erfindungsgemäßen beschichteten Folie verbleiben, die mit der Zeit ausdampfen.

Die dynamische Viskosität der Mischung der ersten und zweiten Komponente des 2-Komponenten Siliconkautschuks beträgt bevorzugt zwischen 500 und 4500 mPas, insbesondere zwischen 3000 und 4000 mPas gemessen nach ISO 3219 bei 23°C.

Das Vernetzen des 2-Komponenten Siliconkautschuks kann bei Raumtemperatur stattfinden. Eine Beschleunigung der Vernetzungsreaktion wird erhalten, wenn für das Vernetzen Temperaturen über Raumtemperatur verwendet werden. Vorzugweise werden Temperaturen von 60 bis 180 °C, insbesondere bei 70 bis 150 °C oder 80 bis 130 °C, verwendet, um den 2-Komponenten Siliconkautschuk zu vernetzen.

Versuche haben gezeigt, dass gerade die Anwesenheit eines vernetzten Liquid Silicone Rubber in der Beschichtung der erfindungsgemäßen beschichteten Folie zu den beschriebenen vorteilhaften Eigenschaften, insbesondere Anti-Graffiti-, Anti-Haft- und Abperl-Eigenschaften, führt. Zudem führt ein vernetzter Liquid Silicone Rubber ohne Zugabe von Pigmenten zu einer transparenten Beschichtung. Eine derartige transparente erfindungsgemäße beschichtete Folie ist insbesondere zum Aufbringen auf Oberflächen geeignet, die durch die beschichtete Folie hindurch erkennbar sein sollen, wie beispielsweise Verkehrszeichen. Dies war deshalb besonders überraschend, da es bisher im Stand der Technik nicht erkannt wurde, dass sich Liquid Silicone Rubber für die Beschichtung von Kunststofffolien eignen, denn die in der Beschichtung eingesetzten Liquid Silicone Rubber werden in der Regel als Vergussmassen zur Herstellung von Formartikeln durch Spritzgießen verwendet.

Gemäß einer bevorzugten Ausführungsform weist die Beschichtung der erfindungsgemäßen beschichteten Folie eine Dicke von 0,5 µm bis 250 µm, insbesondere von 10 µm bis 100 µm oder von 20 µm bis 60 µm auf. Eine solche Schichtdicke ermöglicht die vorstehend beschriebenen vorteilhaften Eigenschaften der erfindungsgemäßen beschichteten Folie, insbesondere Anti-Graffiti-, Anti-Haft- und Abperl-Eigenschaften. Bei einer unterhalb von 0,5 µm liegenden Dicke der Beschichtung werden diese vorteilhaften Eigenschaften nicht oder nicht ausreichend erhalten, eine Dicke der Beschichtung von mehr als 100 µm ist hingegen unökonomisch, da ein zusätzlicher Materialauftrag zu keiner weiteren Verbesserung der Eigenschaften mehr führt und somit lediglich höhere Kosten erzeugt.

Die erfindungsgemäße beschichtete Folie umfasst eine Kunststofffolie. Als Kunststofffolie kann dabei jede dem Fachmann grundsätzlich bekannte Kunststofffolie eingesetzt werden, solange diese sich bei den für das Vernetzen des in der Beschichtung vorhandenen Liquid Silicone Rubber verwendeten Temperaturen nicht verzieht.

Bevorzugt weist die von der erfindungsgemäßen beschichteten Folie umfasste Kunststofffolie einen Schmelzpunkt von über 150 °C, insbesondere von über 200 °C auf. Für eine derartige Kunststofffolie ist sichergestellt, dass diese sich bei erhöhten Temperaturen, denen die Kunststofffolie insbesondere beim Vernetzen des Liquid Silicone Rubbers ausgesetzt sein kann, nicht verzieht. Bei einem Schmelzpunkt der Kunststofffolie von unter 150°C kann dies nicht gewährleistet werden, so dass das Vernetzen des Liquid Silicone Rubber bei niedrigeren Temperaturen durchgeführt werden müsste und damit deutlich länger dauert und weniger effizient ist.

Es wurde allerdings gefunden, dass der Einsatz von Kunststofffolien mit einem Schmelzpunkt von unter 150°C, wie beispielsweise Acrylatfolien, dann bei den genannten hohen Temperaturen möglich ist, wenn die Kunststofffolie auf der Seite, die nicht mit der Beschichtung, enthaltend den Liquid Silicone Rubber, beschichtet werden soll, bereits eine Klebeschicht und ein Trennpapier, wie weiter unten beschrieben, aufweist. In solch einem Fall verhindert insbesondere das Trennpapier, dass sich die Kunststofffolie verzieht. Das Trennpapier muss dann natürlich für die genannten hohen Vernetzungstemperaturen des Liquid Silicone Rubbers geeignet sein, d.h. es darf sich nicht selbst verziehen.

Es hat sich als besonders praxisgerecht herausgestellt, wenn die von der beschichteten Folie umfasste Kunststofffolie eine Polyesterfolie, besonders bevorzugt eine Polyethylenterephthalat-Folie, eine Polybutylenterephthalat-Folie oder eine Polyethylennaphthalat-Folie, insbesondere eine Polyethylenterephthalat-Folie, ist. Eine derartige Kunststofffolie hat den Vorteil, dass sie transparent ist und einen hohen Schmelzpunkt aufweist, so dass die Vernetzung des Liquid Silicone Rubbers auf der Kunststofffolie bei erhöhten Temperaturen erfolgen kann und sich die beschichtete Folie aufgrund der Transparenz gut für die Verwendung zur Beschichtung von Oberflächen eignet, die nach Aufbringen der beschichteten Folie durch diese hindurch sichtbar bleiben sollen.

Bevorzugt weist die Kunststofffolie eine Dicke von 10 µm bis 500 µm, insbesondere von 30 µm bis 200 µm oder von 40 µm bis 80 µm auf. Eine solche Dicke gewährleistet, dass die beschichtete Folie für den Transport und deren weitere Verwendung zum Aufbringen auf Oberflächen geeignete mechanische Eigenschaften, insbesondere im Hinblick auf Zugfestigkeit, Elastizität und Reißfestigkeit, aufweist. Eine Dicke von weniger als 10 µm führt zu einer nicht ausreichend stabilen beschichteten Folie, die bereits bei geringer mechanischer Einwirkung reißt. Es hat sich herausgestellt, dass eine Dicke von mehr als 500 µm, insbesondere mehr als 200 µm, zu keiner weiteren Verbesserung der für die Verwendung und den Transport geeigneten mechanischen Eigenschaften der erfindungsgemäßen beschichteten Folie führt. Höhere Dicken sind daher vor diesem Hintergrund aus ökonomischen Gründen nachteilig, da mehr Material als notwendig eingesetzt wird.

Die tatsächlich eingesetzte Dicke der Kunststofffolie in der erfindungsgemäßen beschichteten Folie kann für den jeweiligen Einsatzzweck weiter optimiert werden. Für Ausführungsformen der erfindungsgemäßen beschichteten Folie, die dazu dienen auf eine Oberfläche, wie eine Wand, Trennwand, Tür, etc. aufgebracht zu werden, um diese mit den vorteilhaften Eigenschaften der erfindungsgemäßen beschichteten Folie auszugestalten, hat es sich als besonders praxisgerecht erwiesen, wenn die Dicke der Kunststofffolie etwa 80 µm bis 300 µm beträgt. Für Ausführungsformen der erfindungsgemäßen beschichteten Folie, die dazu dienen eine Oberfläche zu beschichten, die nach Aufbringen der beschichteten Folie durch diese hindurch klar erkannt werden soll, wie beispielsweise die Vorderseite eines Verkehrsschildes, sind auch deutlich geringere Dicken, beispielsweise zwischen 10 und 70 µm, geeignet.

Die erfindungsgemäße beschichtete Folie kann weitere Schichten umfassen.

Gemäß einer bevorzugten Ausführungsform umfasst die beschichtete Folie zwischen der Kunststofffolie und der Beschichtung eine Grundierung, insbesondere eine vernetzte Grundierung für Siliconkautschuk, die mit dem vernetzten Liquid Silicone Rubber vernetzte Siloxane und/oder Silane enthält. Solche Grundierungen sind dem Fachmann allgemein bekannt und im Handel beispielsweise unter dem Handelsnamen WACKER^{®} GRUNDIERUNG G der Wacker Chemie AG erhältlich.

Vorzugsweise kann die Grundierung vor ihrer Vernetzung dabei eine Lösung reaktiver Siloxane und/oder Silane in einem organischen Lösemittel sein. Bevorzugt wird diese Lösung bei der Herstellung der beschichteten Folie auf mindestens einen Teil der Kunststofffolie aufgetragen. Während des Verdampfens des Lösemittels und unter Luftfeuchtigkeit kann sich dabei eine feste Grundierung bilden, die fest an die Kunststofffolie gebunden ist. Die reaktiven Siloxane und/oder Silane können nach dem Aufbringen des Liquid Silicon Rubbers auf die Grundierung mit dem Liquid Silicon Rubber vernetzen. Dadurch wird eine besonders gute Haftung zwischen der Kunststofffolie und der Beschichtung gewährleistet.

Gemäß einer alternativen Ausführungsform der erfindungsgemäßen beschichteten Folie ist die Kunststofffolie silikonisiert, also mit Silikongruppen funktionalisiert, um die Haftung der Beschichtung auf der Kunststofffolie der erfindungsgemäßen beschichteten Folie weiter zu verbessern, ohne dass hierzu eine Grundierung zwischen der Kunststofffolie und der Beschichtung erforderlich wäre.

Um eine zusätzliche Haftungsverbesserung zwischen der Kunststofffolie und der Beschichtung zu erhalten, kann die beschichtete Folie zwischen der Kunststofffolie und der Beschichtung eine Grundierung, aufweisen und die Kunststofffolie kann zusätzlich silikonisiert sein.

Die erfindungsgemäße beschichtete Folie umfasst auf der der Beschichtung abgewandten Seite der Kunststofffolie eine Klebeschicht. Eine "Klebeschicht" wie hier verwendet ist eine Schicht, die aus Klebstoff besteht oder diesen umfasst. Als Klebstoff können die dem Fachmann bekannten handelsüblichen Klebstoffe verwendet werden. Dabei versteht es sich von selbst, dass die Art des Klebstoffs sich nach der Art der Kunststofffolie sowie der Oberfläche richtet, auf die die beschichtete Folie aufgebracht werden soll. Der Klebstoff kann insbesondere ausgewählt sein aus Acylat-Klebstoffen, insbesondere Cyanacrylat-Klebstoffen oder Methylmethacrylat-Klebstoffen, Polyurethan-Klebstoffen oder Epoxid-Klebstoffen. Eine solche Klebeschicht dient dazu, die beschichtete Folie derart auszurüsten, dass diese auf eine Oberfläche aufgeklebt werden kann. Je nach Art des Klebstoffs kann dieser entweder durch Wärme aktiviert werden und die beschichtete Folie wird auf eine Oberfläche auflaminiert oder der Klebstoff ist selbstklebend, so dass einfaches Andrücken der beschichteten Folie an die Oberfläche ausreicht, damit diese an der Oberfläche haftet.

Gemäß einer weiteren erfindungsgemäßen Ausführungsform umfasst die beschichtete Folie auf der der Kunststofffolie abgewandten Seite der Klebeschicht ein Trennpapier. Diese Ausführungsform ist insbesondere bei Verwendung von selbstklebenden Klebstoffen in der Klebeschicht vorteilhaft, um ein Verkleben der beschichteten Folie beim Aufrollen und dem Transport zu vermeiden. Das Trennpapier kann vor dem Einsatz der beschichteten Folie am Einsatzort entfernt werden und die beschichtete Folie dort auf eine Oberfläche aufgeklebt werden. Das Trennpapier kann vorteilhafterweise eine geprägte Oberfläche aufweisen, die sich auf die Klebeschicht überträgt. Eine derart geprägt Oberfläche des Trennpapiers kann beispielsweise dafür sorgen, dass sich unter der beschichteten Folie bei Aufbringen auf eine Oberfläche keine Lufteinschlüsse bilden.

Bevorzugt weist die beschichtete Folie von einer Seite zur gegenüberliegenden Seite den folgenden Schichtaufbau auf: Optional Trennpapier, Klebeschicht, Kunststofffolie, optional Grundierung, Beschichtung. Die Beschichtung bildet nach Aufbringen der erfindungsgemäßen beschichteten Folie auf die zu beschichtende Oberfläche die Sichtseite und steht im Kontakt mit der eventuell zu entfernenden Verschmutzung, wie Graffiti, Farbe und Aufklebern.

Gemäß einer bevorzugten Ausgestaltung der erfindungsgemäßen beschichteten Folie sind alle Schichten der beschichteten Folie transparent für elektromagnetische Wellen mit Wellenlängen von 400 nm bis 780 nm. Wenn die erfindungsgemäße beschichtete Folie vollständig transparent ist, sind mit dieser transparenten beschichteten Folie versehene darunterliegende Oberflächen, beispielsweise die Vorderseiten von Verkehrszeichen, durch die transparente beschichtete Folie hindurch erkennbar, ohne deren Lesbarkeit bzw. Sichtbarkeit zu beeinträchtigen. Insbesondere erfüllt die transparente beschichtete Folie die Anforderungen an den spezifischen Rückstrahlwert gemäß Abschnitt 12.25 des RAL-GZ 628 für Verkehrszeichen und Verkehrseinrichtungen (Ausgabe Mai 2010) sowie die weiteren im RAL-GZ 628 festgelegten Anforderungen.

Gemäß einer alternativen Ausführungsform der erfindungsgemäßen beschichteten Folie kann mindestens eine Schicht der beschichteten Folie Pigmente enthalten. Eine Schicht, die Pigmente enthält, im Sinne der Erfindung ist nicht mehr transparent, sondern blickdicht. Die in der mindestens einen Schicht der erfindungsgemäßen beschichteten Folie enthaltenen Pigmente können organische und/oder anorganische Pigmente sein. Die Pigmente können beispielsweise ausgewählt sein aus der Gruppe bestehend aus Titandioxid, Eisenoxidgelb, Bismutvanadat, Rutil-Zinn-Zink, Eisenoxidrot, Kobaltblau, Ultramarinblau, Chromoxidgrün, Kobaltgrün, Farbruß, Eisenoxidschwarz und Mischungen davon. Das Vorsehen von Pigmenten in der mindestens einen Schicht der beschichteten Folie führt zu farbigen nichttransparenten beschichteten Folien, die, je nach Pigment, gewünschte Bereiche des Farbspektrums abdecken können. Solche farbigen beschichteten Folien können beispielsweise verwendet werden, um mit den genannten Verschmutzungen verschmutzte und/oder beschädigte Oberflächen zu bedecken, so dass diese den Farbeindruck der Beschichtung erwecken. Durch das Aufbringen der farbigen beschichteten Folie werden insbesondere die darunterliegenden auf der Oberfläche befindlichen Verschmutzungen und/oder Beschädigungen vollständig abgedeckt, d.h. ein Hindurchscheinen der Verschmutzungen und/oder Beschädigungen wird verhindert. Vorteilhaft ist weiter, dass eine solche Oberfläche mit der aufgebrachten farbigen beschichteten Folie die vorteilhaften Eigenschaften, insbesondere Anti-Graffiti-, Anti-Haft- und Abperl-Eigenschaften, der erfindungsgemäßen beschichteten Folie aufweist und leicht gereinigt werden kann, während ein vorheriges Reinigen und/oder Ausbessern der verschmutzten und/oder beschädigten Oberfläche nicht notwendig ist. Insbesondere ist es ausreichend die erfindungsgemäße farbige beschichtete Folie auf die Oberfläche aufzubringen, um den Eindruck einer neuwertigen Oberfläche zu erzielen.

Alternativ kann die erfindungsgemäße transparente beschichtete Folie zum Bedecken von verschmutzten und/oder beschädigten Oberflächen verwendet werden, indem diese zuvor auf eine blickdichte farbige Kunststofffolie auflaminiert wird und der Verbund aus der erfindungsgemäßen transparenten beschichteten Folie zusammen mit der blickdichten farbigen Kunststofffolie auf den zu bedeckenden Gegenstand aufgebracht wird. Blickdicht im Sinne der Erfindung bedeutet intransparent. Vorteilhaft an dieser Alternative ist, dass die blickdichte farbige Kunststofffolie nicht die oben für die Kunststofffolie in der erfindungsgemäßen beschichteten Folie genannten Erfordernisse in Bezug auf die Aushärtungstemperatur erfüllen muss und somit frei ausgewählt werden kann.

Die Erfindung stellt weiter ein Verfahren zur Herstellung einer erfindungsgemäßen beschichteten Folie, umfassend die folgenden Schritte, bereit:
i. Bereitstellen einer Kunststofffolie;
ii. Aufbringen eines Liquid Silicone Rubbers auf eine Seite der Kunststofffolie;
iii. Vernetzen des Liquid Silicone Rubbers.
b. Aufbringen einer Klebeschicht auf die Seite der Kunststofffolie, auf die der Liquid Silicone Rubber nicht aufgebracht wird.

Mit einem solchen Verfahren kann eine erfindungsgemäße beschichtete Folie mit den beschriebenen Eigenschaften hergestellt werden. Insbesondere kann ein solches Verfahren schnell und kosteneffizient durchgeführt werden. Es versteht sich von selbst, dass die für die Ausgestaltung der erfindungsgemäßen beschichteten Folie oben beschriebenen Angaben für das erfindungsgemäße Verfahren analog gelten.

Das erfindungsgemäße Verfahren umfasst in Schritt i. das Bereitstellen einer Kunststofffolie. Die Kunststofffolie kann dabei derart ausgestaltet sein, wie dies im Zusammenhang mit der erfindungsgemäßen beschichteten Folie weiter oben bereits ausführlich beschrieben wurde.

Gemäß Schritt ii. des erfindungsgemäßen Verfahrens wird ein Liquid Silicone Rubber auf eine Seite der Kunststofffolie aufgebracht. Der Liquid Silicone Rubber kann dabei derart ausgestaltet sein, wie dies im Zusammenhang mit der erfindungsgemäßen beschichteten Folie weiter oben bereits ausführlich beschrieben wurde.

Erfindungsgemäß wird der Liquid Silicone Rubber auf genau eine Seite der Kunststofffolie aufgebracht. Dies ermöglicht, dass die beiden Seiten der Kunststofffolie unterschiedliche Eigenschaften aufweisen können, beispielsweise kann die mit dem Liquid Silicone Rubber beschichtete Seite Anti-Graffiti-, Anti-Haft- und Abperl-Eigenschaften aufweisen, währen die andere Seite haftende Eigenschaften aufweist und/oder mit weiteren Schichten modifiziert sein kann.

Das Aufbringen des Liquid Silicone Rubbers auf eine Seite der Kunststofffolie in Schritt ii. erfolgt bevorzugt auf mehr als 90 %, insbesondere mehr als 95 % der Oberfläche der einen Seite der Kunststofffolie. Besonders bevorzugt erfolgt das Aufbringen des Liquid Silicone Rubbers auf die vollständige Oberfläche der einen Seite der Kunststofffolie. Dadurch können gleichmäßige Oberflächeneigenschaften der einen Seite der Kunststofffolie, auf die der Liquid Silicone Rubber aufgebracht wurde, gewährleistet werden.

In Schritt iii. des erfindungsgemäßen Verfahrens erfolgt die Vernetzung des auf mindestens eine Seite der Kunststofffolie aufgetragenen Liquid Silicone Rubbers.

Gemäß einer bevorzugten Ausgestaltung des erfindungsgemäßen Verfahrens erfolgt das Vernetzen in Schritt iii. bei einer Temperatur von 80 bis 200 °C, insbesondere bei 100 bis 160 °C oder 140 bis 150 °C. Eine solche Temperatur ermöglicht eine zügige Vernetzung des Liquid Silicone Rubbers. Dadurch kann das Verfahren schnell und effizient durchgeführt werden. Eine Temperatur von weniger als 80°C verlängert die für die Vernetzung erforderliche Zeit deutlich und ist daher weniger effizient. Eine Temperatur oberhalb von 180°C birgt die Gefahr, dass sich die Kunststofffolie verzieht.

Besonders bevorzugt erfolgt das Vernetzen in Schritt iii. bei den vorstehend genannten Temperaturen über einen Zeitraum von 12 s bis 10 min, insbesondere von 30 s bis 5 min oder 1 bis 2 min, bevor die beschichtete Folie aufgerollt wird. Eine Dauer von weniger als 12 s ist für eine ausreichende Vernetzung, die ein Aufrollen der beschichteten Folie erlaubt, ohne dass die Oberfläche der beschichteten Folie in der Rolle mit der Unterseite der beschichteten Folie verklebt, unzureichend. Eine zu lange Dauer von mehr als 10 min ist unökonomisch. Überraschenderweise hat sich herausgestellt, dass es möglich ist die Beschichtung derart teilweise auszuhärten, dass die beschichtete Folie aufgerollte werden kann ohne zu verkleben und die Vernetzung auch nach dem Abkühlen und Aufrollen der beschichteten Folie weiter fortschreitet.

Gemäß einer bevorzugten Ausgestaltung des erfindungsgemäßen Verfahrens umfasst das Verfahren vor Schritt ii. ferner folgenden Schritt:
a. Behandeln der Seite der Kunststofffolie, auf die der Liquid Silicone Rubber in Schritt ii. aufgebracht wird, mit einer Grundierung.

Ein solches Behandeln mit einer Grundierung ermöglicht eine verbesserte Haftung des Liquid Silicone Rubbers auf der Kunststofffolie, da diese beim Vernetzen in Verfahrensschritt iii. chemisch aneinander gebunden werden können. Die Grundierung kann dabei so ausgestaltet sein, wie dies für die erfindungsgemäße beschichtete Folie weiter oben ausführlich beschrieben wurde. Die Kunststofffolie kann allerdings alternativ oder zusätzlich auch in Schritt i. des erfindungsgemäßen Verfahrens als silikonisierte Kunststofffolie bereitgestellt werden, dann ist das Aufbringen einer Grundierung zur Haftungsverbesserung nicht unbedingt erforderlich oder weiter verbessert.

Das erfindungsgemäße Verfahren umfasst zudem den folgenden Schritt:
b. Aufbringen einer Klebeschicht auf die Seite der Kunststofffolie, auf die der Liquid Silicone Rubber nicht aufgebracht wird.

Das im Zusammenhang mit der erfindungsgemäßen beschichteten Folie zur Klebeschicht Gesagte gilt analog für die Klebeschicht des erfindungsgemäßen Verfahrens.

Gemäß einer weiteren erfindungsgemäßen Ausführungsform umfasst das Verfahren den folgenden Schritt:
c. Aufbringen eines Trennpapiers auf die Kunststofffolie, insbesondere auf die Seite der Kunststofffolie, auf die der Liquid Silicone Rubber nicht aufgebracht wird.

Das im Zusammenhang mit der erfindungsgemäßen beschichteten Folie zum Trennpapier Gesagte gilt analog für das Trennpapier des erfindungsgemäßen Verfahrens.

Die Schritte b. und c. können auch gleichzeitig stattfinden, indem ein bereits mit einer Klebeschicht beschichtetes Trennpapier eingesetzt wird und mit der Seite der Klebeschicht auf eine Kunststofffolie aufgebracht wird, insbesondere auf die Seite der Kunststofffolie, auf die der Liquid Silicone Rubber nicht aufgebracht wird.

Die Verfahrensschritte des erfindungsgemäßen Verfahrens können ausgehend von Schritt i. in jeder für den Fachmann zweckmäßigen Reihenfolge stattfinden. Bevorzugt finden die Verfahrensschritte des erfindungsgemäßen Verfahrens im folgenden zeitlichen Ablauf statt: Schritt i., optional Schritt a., Schritt ii., Schritt iii., Schritt b., optional Schritt c oder optional Schritt b. und Schritt c. gleichzeitig. Alternativ können die Verfahrensschritte auch in folgender Reihenfolge stattfinden: Schritt i., Schritt b., optional Schritt c. oder optional Schritt b. und Schritt c. gleichzeitig, optional Schritt a., Schritt ii., Schritt iii.

Gegenstand der Erfindung ist ferner die Verwendung einer erfindungsgemäßen beschichteten Folie oder einer nach einem erfindungsgemäßen Verfahren hergestellten erfindungsgemäßen beschichteten Folie zur Verbesserung der Anti-Graffiti-, Anti-Haft- und/oder Abperl-Eigenschaften einer Oberfläche.

Zur Reinigung einer solchen Oberfläche von Verschmutzungen werden lediglich leichte mechanische Kräfte und/oder Leitungswasser und keine organischen Lösungsmittel benötigt. Die Reinigung der Oberfläche kann dann beispielsweise mit einem Lappen, einem Hochdruckreiniger oder für den Fall, dass Graffiti von der Oberfläche entfernt werden soll, mittels Klebefolien, beispielsweise einem Flusenroller bzw. einem Kleiderroller zum Reinigen von Kleidung auf dem sich Klebebänder auf einer Rolle befinden, erfolgen.

Gemäß einer bevorzugten Ausführungsform der erfindungsgemäßen Verwendung ist die Oberfläche eine Oberfläche aus Metall, Kunststoff, Holz und/oder Verbundwerkstoff. Besonders bevorzugt ist die Oberfläche die Vorderseite eines Verkehrszeichens.

Es versteht sich von selbst, dass die erfindungsgemäße Folie für die erfindungsgemäße Verwendung derart ausgestaltet sein kann, wie dies oben im Zusammenhang mit der erfindungsgemäßen Folie beschrieben wurde.

Schließlich ist Gegenstand der Erfindung ein Verkehrszeichen, wobei mindestens auf der Vorderseite des Verkehrszeichens eine erfindungsgemäße transparente beschichtete Folie oder eine nach dem erfindungsgemäßen Verfahren hergestellte erfindungsgemäße transparente beschichtete Folie derart aufgebracht ist, dass die Beschichtung, vom Verkehrszeichen aus betrachtet, die äußerste Schicht bildet. Ein solches Verkehrszeichen weist die vorstehend beschriebenen vorteilhaften Eigenschaften auf, insbesondere können Graffiti, Farbverschmierungen, Filzschreiber und Aufkleber (Sticker) leicht entfernt werden und das Verkehrszeichen weist einen Abperl-Effekt sowie eine gute Witterungsbeständigkeit auf. Zusätzlich werden durch die erfindungsgemäße transparente beschichtete Folie die behördlichen Anforderungen an Durchlässigkeit von Reflexionsstrahlen und Lichtintensität bei Verkehrszeichen erfüllt, das Verkehrszeichen ist gut lesbar. Das Verkehrszeichen kann zusätzlich auf seiner Rückseite mit einer erfindungsgemäßen transparenten oder farbigen beschichteten Folie beschichtet sein. Die Rückseite des Verkehrszeichens ist dabei die dem Betrachter abgewandte Seite des Verkehrszeichens, d.h. die Seite des Verkehrszeichens auf der das Verkehrszeichen kein Zeichen aufweist. Hierdurch können die vorteilhaften Eigenschaften der erfindungsgemäßen beschichteten Folie auch auf der Rückseite des Verkehrszeichens erhalten werden.

Das Prinzip der Erfindung soll im Folgenden anhand von den Erfindungsgegenstand nicht einschränkenden Beispielen unter Bezugnahme auf die drei Figuren näher erläutert werden.
- Fig. 1: Schematische Darstellung einer Ausführungsform einer (nicht erfindungsgemäßen) beschichteten Folie
- Fig. 2: Schematische Darstellung einer alternativen Ausführungsform einer (nicht erfindungsgemäßen) Folie
- Fig. 3: Schematische Darstellung einer Ausführungsform der erfindungsgemäßen beschichtete Folie

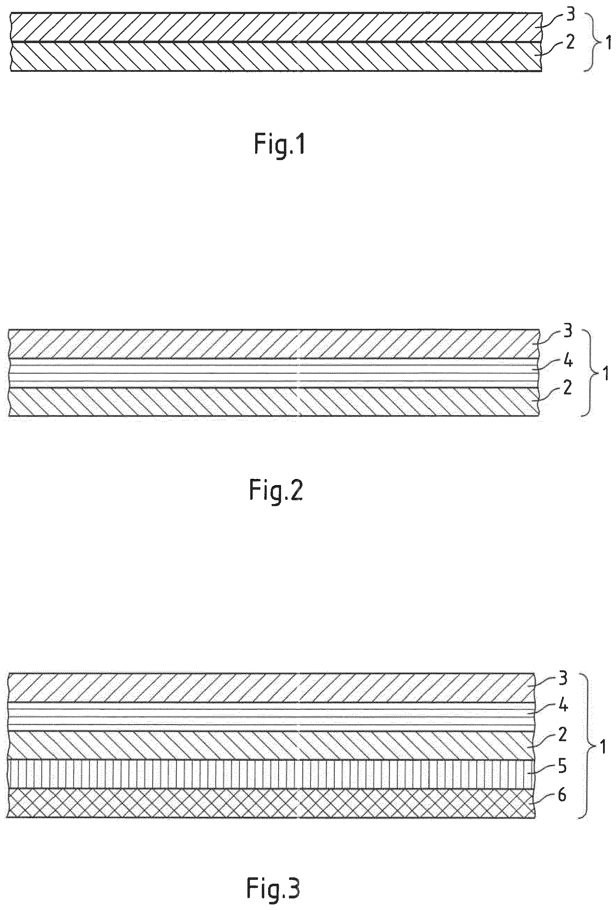

Figur 1 zeigt schematisch eine Ausführungsform einer (nicht erfindungsgemäßen) beschichteten Folie 1. Die beschichtete Folie 1 umfasst eine Kunststofffolie 2 mit einer darauf angeordneten Beschichtung 3. Die Beschichtung enthält einen Liquid Silicone Rubber (in der Figur nicht dargestellt). Eine derartige beschichtete Folie kann wie in Beispiel 1 beschrieben hergestellt werden und eignet sich beispielsweise dazu auf eine Oberfläche auflaminiert zu werden.

In Figur 2 ist eine alternative Ausführungsform einer beschichteten Folie 1 schematisch dargestellt. Die beschichtete Folie 1 umfasst eine Kunststofffolie 2 mit einer darauf angeordneten Beschichtung 3. Zwischen der Kunststofffolie 2 und der Beschichtung 3 befindet sich eine Grundierung 4. Diese Ausführungsform der beschichteten Folie 1 kann wie in Beispiel 2 beschrieben hergestellt werden und eignet sich beispielsweise dazu auf eine Oberfläche unter Anwendung von Druck und Wärme aufkaschiert zu werden.

Figur 3 zeigt schematisch eine Ausführungsform einer erfindungsgemäßen beschichteten Folie 1. Die erfindungsgemäße beschichtete Folie 1 umfasst eine Kunststofffolie 2 mit einer darauf angeordneten Beschichtung 3. Zwischen der Kunststofffolie 2 und der Beschichtung 3 befindet sich eine Grundierung 4. Auf der der Beschichtung 3 abgewandten Seite der Kunststofffolie 2 befindet sich eine Klebeschicht 5. Auf der Klebeschicht ist ein Trennpapier 6 angeordnet. Eine derartige beschichtete Folie 1 lässt sich durch Abziehen des Trennpapiers 6 mittels der Klebeschicht 5 auf eine Oberfläche aufbringen und haftet auf dieser.

### Ausführungsbeispiele

### Eingesetzte Materialien:

| | |
|---|---|
| Beschichtung: | 2-Komponenten Siliconkautschuk ELASTOSIL^{®}RT 601 A/B |
| Inhibitor: | WACKER^{®} INHIBITOR PT88 |
| Weiterer Vernetzer: | ELASTOSIL^{®} VERNETZER 525 |
| Grundierung: | WACKER^{®} GRUNDIERUNG G 790 Toluol frei |
| Kunststofffolie: | Polyethylenterephthalat-Folie mit einer Dicke von 30 µm bzw. 60 µm |
| Klebeschicht: | Acrylatkleber Lactite-Duro-Tak 151A von Henkel |

### Beispiel 1: Herstellung einer beschichteten Folie mit dem Schichtaufbau Kunststofffolie/

### Beschichtung (s. Fig. 1) (nicht erfindungsgemäß)

Es wurde eine Polyethylenterephthalat-Folie mit einer Dicke von 60 µm bereitgestellt. Anschließend wurden separat 9 Gewichtsteile der ersten Komponente des 2-Komponenten Siliconkautschuks ELASTOSIL^{®}RT 601 A, enthaltend Polydimethylsiloxan mit Vinylendgruppen und einer platinorganische Verbindung als Katalysator sowie Füllstoffe, mit 0,075 Gew.-% des Inhibitors, bezogen auf die Gesamtmenge der ersten und zweiten Komponente, gemischt und ein Gewichtsteil der zweiten Komponente ELASTOSIL^{®}RT 601 B, enthaltend ein Polymethylhydrogensiloxan, mit 3 Gew.-% des weiteren Vernetzers, bezogen auf die Gesamtmenge der ersten und zweiten Komponente, gemischt. Die sich daraus jeweils ergebenden zwei einzelnen Mischungen wurden anschließend vermischt und diese Mischung auf eine Seite der Polyethylenterephthalat-Folie in einer Dicke von ca. 50 µm aufgebracht. Danach wurde die Folie für 90 Sekunden bei 150 °C in einem Ofen erhitzt. Beim Herausholen der Folie aus dem Ofen war der 2-Komponenten-Siliconkautschuk ausreichend angehärtet und fest mit der Folie verbunden, so dass die beschichtete Folie ohne Schwierigkeiten aufgerollt werden konnte.

### Beispiel 2: Herstellung einer heschichteten Eolie mit dem Schichtaufbau Kunststofffolie/ Grundierung / Beschichtung (s. Fig. 2) (nicht erfindungsgemäß)

Es wurden eine Polyethylenterephthalat-Folie mit einer Dicke von 30 µm bereitgestellt. Anschließend wurde als Grundierung eine Lösung reaktiver Siloxane und Silane in einem organischen Lösemittel dünn (ca. 5 µm Schichtdicke) auf eine Seite der Polyethylenterephthalat-Folie aufgetragen. Im Anschluss wurde die Folie eine Stunde bei Raumtemperatur und 40 % Luftfeuchtigkeit liegen gelassen. In dieser Zeit verdampfte das organische Lösemittel und es bildete sich eine Grundierung, die fest an die eine Seite der Polyethylenterephthalat-Folie gebunden war. Danach wurden separat 9 Gewichtsteile der ersten Komponente des 2-Komponenten Siliconkautschuks ELASTOSIL^{®}RT 601 A, enthaltend Polydimethylsiloxan mit Vinylendgruppen und einer platinorganische Verbindung als Katalysator sowie Füllstoffe, mit 0,075 Gew.-% des Inhibitors, bezogen auf die Gesamtmenge der ersten und zweiten Komponente, gemischt und ein Gewichtsteil der zweiten Komponente ELASTOSIL^{®}RT 601 B, enthaltend ein Polymethylhydrogensiloxan, mit 3 Gew.-% des weiteren Vernetzers, bezogen auf die Gesamtmenge der ersten und zweiten Komponente, gemischt. Die sich daraus jeweils ergebenden zwei einzelnen Mischungen wurden anschließend vermischt und die Mischung auf die Seite der Polyethylenterephthalat-Folie, auf die die Grundierung aufgebracht worden war, in einer Dicke von ca. 50 µm aufgebracht. Anschließend wurde die Folie für 90 Sekunden bei 150 °C in einem Ofen erhitzt. Beim Herausholen der Folie aus dem Ofen war der 2-Komponenten-Siliconkautschuk ausreichend angehärtet und die drei Schichten ausreichend fest miteinander verbunden, so dass die beschichtete Folie ohne Schwierigkeiten aufgerollt werden konnte.

### Beispiel 3: Herstellung einer beschichteten Folie mit Schichtaufbau Trennpapier / Kebeschicht/Kunststoffschicht/Grundierung/Beschichtung (s. Fig. 3)

Es wurde eine Polyethylenterephthalat-Folie mit einer Dicke von 60 µm bereitgestellt. Anschließend wurde als Grundierung eine Lösung reaktiver Siloxane und Silane in einem organischen Lösemittel dünn (ca. 5 µm Schichtdicke) auf eine Seite der Polyethylenterephthalat-Folie aufgetragen. Im Anschluss wurde die Folie eine Stunde bei Raumtemperatur und 40 % Luftfeuchtigkeit liegen gelassen. In dieser Zeit verdampfte das organische Lösemittel und es bildete sich eine Grundierung, die fest an die eine Seite der Polyethylenterephthalat-Folie gebunden war. Danach wurden separat 9 Gewichtsteile der ersten Komponente des 2-Komponenten Siliconkautschuks ELASTOSIL^{®}RT 601 A, enthaltend Polydimethylsiloxan mit Vinylendgruppen und einer platinorganische Verbindung als Katalysator sowie Füllstoffe, mit 0,075 Gew.-% des Inhibitors, bezogen auf die Gesamtmenge der ersten und zweiten Komponente, gemischt und ein Gewichtsteil der zweiten Komponente ELASTOSIL^{®}RT 601 B, enthaltend ein Polymethylhydrogensiloxan, mit 3 Gew.-% des weiteren Vernetzers, bezogen auf die Gesamtmenge der ersten und zweiten Komponente, gemischt. Die sich daraus jeweils ergebenden zwei einzelnen Mischungen wurden anschließend vermischt und die Mischung auf die Seite der Polyethylenterephthalat-Folie, auf die die Grundierung aufgebracht worden war, in einer Dicke von ca. 50 µm, aufgebracht. Die beschichtete Folie wurde für 90 Sekunden bei 150 °C in einem Ofen erhitzt. Beim Herausholen der beschichteten Folie aus dem Ofen war der 2-Komponenten-Siliconkautschuk ausreichend angehärtet und die drei Schichten fest miteinander verbunden. Auf die nicht mit dem Siliconkautschuk beschichtete Seite der beschichteten Folie wurde ein Acrylatkleber aufgebracht. Schließlich wurde auf den Acrylatkleber ein Trennpapier aufgebracht. Die beschichtete Folie wurde anschließend aufgerollt.

### Beispiel 4: Aufbringen einer beschichteten Folie auf die Vorderseite eines Verkehrszeichens (nicht erfindungsgemäß)

Eine gemäß Beispiel 2 hergestellte beschichtete Folie wurde auf die Vorderseite eines Verkehrszeichens unter Verwendung von Druck und Wärme auflaminiert.

Im Anschluss wurden die optischen Eigenschaften, die Anti-Graffiti-, die Anti-Haft- und die Abperl-Eigenschaften der mit der beschichteten Folie versehenen Vorderseite des Verkehrszeichens untersucht.

Es wurde keine Beeinträchtigung der Lesbarkeit und des Reflexionsverhaltens der Oberfläche des Verkehrszeichens mit der beschichteten Folie gegenüber einer Vorderseite eines Verkehrszeichens ohne beschichtete Folie festgestellt.

Auf die Vorderseite des Verkehrszeichens wurde ein Sticker aufgeklebt. Dieser Sticker fand kaum Halt auf der Oberfläche und konnte durch einfaches Abziehen vom Verkehrszeichen entfernt werden.

Die Vorderseite des Verkehrszeichens wurde mit einem Permanentmarker (edding^{®} 3000 Permanentmarker) beschriftet. Es zeigte sich, dass die Tinte abperlte und ein Beschriften kaum möglich war. Die Tinte konnte durch Wasser oder einfaches Abwischen mit einem Tuch problemlos entfernt werden.

Schließlich wurde die Vorderseite mittels eines Wasserzerstäubers befeuchtet, um die Abperl-Eigenschaften zu untersuchen. Das aufgesprühte Wasser perlte dabei von der Oberfläche vollständig ab.

**Im** Ergebnis erfüllt das mit der erfindungsgemäßen beschichteten Folie versehene Verkehrszeichen alle Anforderungen nach RAL-GZ 628 (Ausgabe Mai 2010) für Verkehrszeichen und Verkehrseinrichtungen und weist zudem gleichzeitig Anti-Graffiti-, Abperl- und Anti-Haft-Eigenschaften auf.

## Patentansprüche

1. Beschichtete Folie zum Aufbringen auf eine Oberfläche für das erleichterte Entfernen von Graffiti, Farbe und Aufklebern von der Oberfläche, umfassend eine Kunststofffolie und eine auf der Kunststofffolie angeordnete Beschichtung, wobei die Beschichtung einen vernetzten Liquid Silicone Rubber enthält und wobei die beschichtete Folie, auf der der Beschichtung abgewandten Seite der Kunststofffolie, eine Klebeschicht umfasst.

2. Beschichtete Folie nach Anspruch 1, **dadurch gekennzeichnet, dass** die Kunststofffolie eine Dicke von 10 µm bis 500 µm, insbesondere von 30 µm bis 200 µm oder von 40 µm bis 80 µm aufweist.

3. Beschichtete Folie nach Anspruch 1 oder 2, **dadurch gekennzeichnet, dass** die Kunststofffolie eine Polyesterfolie, insbesondere eine Polyethylenterephthalat-Folie, eine Polybutylenterephthalat-Folie oder eine Polyethylennaphthalat-Folie, insbesondere eine Polyethylenterephthalat-Folie ist.

4. Beschichtete Folie nach einem der vorstehenden Ansprüche, **dadurch gekennzeichnet, dass** die Beschichtung eine Dicke von 0,5 µm bis 250 µm, insbesondere von 10 µm bis 100 µm oder von 20 µm bis 60 µm aufweist.

5. Beschichtete Folie nach einem der vorstehenden Ansprüche, **dadurch gekennzeichnet, dass** der vernetzte Liquid Silicone Rubber Polydimethylsiloxan enthält, insbesondere dass der vernetzte Liquid Silicone Rubber, jeweils bezogen auf das Gesamtgewicht des vernetzten Liquid Silicone Rubbers, mindestens 50 Gew.-%, insbesondere mindestens 60 Gew.-% oder mindestens 70 Gew.-% Polydimethylsiloxan enthält.

6. Beschichtete Folie nach einem der vorstehenden Ansprüche, **dadurch gekennzeichnet, dass** der vernetzte Liquid Silicone Rubber ein vernetzter 2-Komponenten Siliconkautschuk, insbesondere ein vernetzter Raumtemperatur-vernetzender 2-Komponenten Siliconkautschuk ist.

7. Beschichtete Folie nach einem der vorstehenden Ansprüche, **dadurch gekennzeichnet, dass** die beschichtete Folie zwischen der Kunststoffschicht und der Beschichtung eine Grundierung umfasst.

8. Verfahren zur Herstellung einer beschichteten Folie nach einem der Ansprüche 1 bis 7, umfassend die folgenden Schritte:
i. Bereitstellen einer Kunststofffolie;
ii. Aufbringen eines Liquid Silicone Rubber auf eine Seite der Kunststofffolie;
iii. Vernetzen des Liquid Silicone Rubber;
b. Aufbringen einer Klebeschicht auf die Seite der Kunststofffolie, auf die der Liquid Silicone Rubber nicht aufgebracht wird.

9. Verfahren nach Anspruch 8, **dadurch gekennzeichnet, dass** das Aufbringen des Liquid Silicone Rubber einen Schritt des Mischens eines Polydimethylsiloxans mit vernetzbaren Endgruppen, bevorzugt Hydroxyl-, Amino-, Vinyl-, und/oder Silanolendgruppen, insbesondere Vinylendgruppen, einer platinorganischen Verbindung, eines Polymethylhydrogensiloxans sowie optional Füllstoffen, umfasst.

10. Verfahren nach Anspruch 8 oder 9, **dadurch gekennzeichnet, dass** das Vernetzen in Schritt iii. bei 60 bis 180 °C, insbesondere bei 70 bis 150 °C oder 80 bis 130 °C erfolgt.

11. Verfahren nach einem der Ansprüche 8 bis 10, **dadurch gekennzeichnet, dass** das Vernetzen in Schritt iii. über einen Zeitraum von 12 s bis 10 min, insbesondere von 30 s bis 5 min, besonders bevorzugt von 1 bis 2 min, erfolgt.

12. Verfahren nach einem der Ansprüche 8 bis 11, **dadurch gekennzeichnet, dass** das Verfahren vor Verfahrensschritt ii. folgenden Schritt umfasst:
a. Silikonisieren der Seite der Kunststofffolie, auf die der Liquid Silicone Rubber in Schritt ii. aufgebracht wird;
und/oder Behandeln der Seite der Kunststofffolie, auf die der Liquid Silicone Rubber in Schritt ii. aufgebracht wird, mit einer Grundierung.

13. Verwendung einer beschichteten Folie nach einem der Ansprüche 1 bis 7 oder einer nach einem Verfahren nach einem der Ansprüche 8 bis 12 hergestellten beschichteten Folie zur Verbesserung der Anti-Graffiti-, Anti-Haft- und/oder Abperl-Eigenschaften einer Oberfläche.

14. Verwendung nach Anspruch 13, **dadurch gekennzeichnet, dass** die Oberfläche eine Oberfläche aus Metall, Kunststoff, Holz und/oder Verbundwerkstoff, insbesondere die Vorderseite eines Verkehrszeichens, ist.

15. Verkehrszeichen, wobei mindestens auf der Vorderseite des Verkehrszeichens eine beschichtete Folie nach einem der Ansprüche 1 bis 7 oder eine nach einem Verfahren nach einem der Ansprüche 8 bis 12 hergestellte beschichtete Folie derart aufgebracht ist, dass die Beschichtung, vom Verkehrszeichen aus betrachtet, die äußerste Schicht bildet.

## Claims

1. Coated film for application to a surface for easier removal of graffiti, paint and stickers from the surface, comprising a plastic film and a coating arranged on the plastic film, wherein the coating contains a crosslinked liquid silicone rubber and wherein the coated film comprises an adhesive layer on the side of the plastics film facing away from the coating.

2. Coated film according to claim 1, **characterized in that** the plastic film has a thickness of 10 µm to 500 µm, in particular 30 µm to 200 µm or 40 µm to 80 µm.

3. Coated film according to claim 1 or 2, **characterized in that** the plastic film is a polyester film, in particular a polyethylene terephthalate film, a polybutylene terephthalate film or a polyethylene naphthalate film, in particular a polyethylene terephthalate film.

4. Coated film according to any of the preceding claims,
**characterized in that** the coating has a thickness of 0.5 to 250 µm, in particular 10 µm to 100 µm or 20 to 60 µm.

5. Coated film according to any of the preceding claims, **characterized in that** the crosslinked liquid silicone rubber contains polydimethylsiloxane, in particular that the crosslinked liquid silicone rubber contains at least 50 wt.%, in particular at least 60 wt.% or at least 70 wt.% polydimethylsiloxane based on the total weight of the crosslinked liquid silicone rubber in each case.

6. Coated film according to any of the preceding claims,
**characterized in that** the crosslinked liquid silicone rubber is a crosslinked 2-component silicone rubber, in particular a crosslinked 2-component silicone rubber which crosslinks at room temperature.

7. Coated film according to any of the preceding claims, **characterized in that** the coated film comprises a primer between the plastic layer and the coating.

8. Method for producing a coated film according to any of claims 1 to 7, comprising the following steps:
i. providing a plastic film;
ii. applying a liquid silicone rubber to one side of the plastic film;
iii. crosslinking the liquid silicone rubber;
b. applying an adhesive layer to the side of the plastic film to which the liquid silicone rubber is not applied.

9. Method according to claim 8, **characterized in that** the application of the liquid silicone rubber comprises a step of mixing a polydimethylsiloxane with crosslinkable end groups, preferably hydroxyl, amino, vinyl, and/or silanol end groups, in particular vinyl end groups, an organoplatinum compound, a polymethyl hydrogen siloxane, and optionally fillers.

10. Method according to claim 8 or 9, **characterized in that** the crosslinking in step iii. takes place at 60 to 180 °C, in particular at 70 to 150 °C or 80 to 130 °C.

11. Method according to any of claims 8 to 10, **characterized in that** the crosslinking in step iii. takes place over a period of 12 s to 10 min, in particular from 30 s to 5 min, more preferably from 1 to 2 min.

12. Method according to any of claims 8 to 11, **characterized in that** the method comprises the following step prior to method step ii.:
a. siliconizing the side of the plastic film onto which the liquid silicone rubber is applied in step ii.;
and/or treating the side of the plastic film to which the liquid silicone rubber is applied in step ii. with a primer.

13. Use of a coated film according to any of claims 1 to 7 or a coated film produced according to a method according to any of claims 8 to 12 for improving the anti-graffiti, anti-stick and/or beading properties of a surface.

14. Use according to claim 13, **characterized in that** the surface is a surface made of metal, plastic material, wood and/or composite material, in particular the front of a traffic sign.

15. Traffic sign, wherein a coated film according to any of claims 1 to 7 or a coated film produced according to a method according to any of claims 8 to 12 is applied at least on the front side of the traffic sign such that the coating, as seen from the traffic sign, forms the outermost layer.

## Revendications

1. Film revêtu destiné à être appliqué sur une surface pour faciliter l'enlèvement de graffitis, de peinture et d'autocollants de la surface, comprenant un film en matière plastique et un revêtement disposé sur le film en matière plastique, dans lequel le revêtement contient un caoutchouc de silicone liquide réticulé et dans lequel le film revêtu comprend, sur le côté du film en matière plastique opposé au revêtement, une couche adhésive.

2. Film revêtu selon la revendication 1, **caractérisé en ce que** le film en matière plastique présente une épaisseur allant de 10 µm à 500 µm, en particulier de 30 µm à 200 µm ou de 40 µm à 80 µm.

3. Film revêtu selon la revendication 1 ou 2, **caractérisé en ce que** le film en matière plastique est un film en polyester, en particulier un film en polyéthylène téréphtalate, un film en polybutylène téréphtalate ou un film en polyéthylène naphtalate, en particulier un film en polyéthylène téréphtalate.

4. Film revêtu selon l'une des revendications précédentes, **caractérisé en ce que** le revêtement présente une épaisseur allant de 0,5 µm à 250 µm, en particulier de 10 µm à 100 µm ou de 20 µm à 60 µm.

5. Film revêtu selon l'une des revendications précédentes, **caractérisé en ce que** le caoutchouc de silicone liquide réticulé contient du polydiméthylsiloxane, **en particulier en ce que** le caoutchouc de silicone liquide réticulé contient, respectivement par rapport au poids total du caoutchouc de silicone liquide réticulé, au moins 50 % en poids, en particulier au moins 60 % en poids ou au moins 70 % en poids de polydiméthylsiloxane.

6. Film revêtu selon l'une des revendications précédentes, **caractérisé en ce que** le caoutchouc de silicone liquide réticulé est un caoutchouc de silicone réticulé à 2 composants, en particulier un caoutchouc de silicone réticulé à 2 composants réticulant à température ambiante.

7. Film revêtu selon l'une des revendications précédentes, **caractérisé en ce que** le film revêtu comprend une couche d'apprêt entre la couche en matière plastique et le revêtement.

8. Procédé de fabrication d'un film revêtu selon l'une des revendications 1 à 7, comprenant les étapes suivantes :
i. fourniture d'un film en matière plastique ;
ii. application d'un caoutchouc de silicone liquide sur un côté du film en matière plastique ;
iii. réticulation du caoutchouc de silicone liquide ;
b. application d'une couche adhésive sur le côté du film en matière plastique sur lequel le caoutchouc de silicone liquide n'est pas appliqué.

9. Procédé selon la revendication 8, **caractérisé en ce que** l'application du caoutchouc de silicone liquide comprend une étape de mélange d'un polydiméthylsiloxane avec des groupes terminaux réticulables, de préférence des groupes terminaux hydroxyle, amino, vinyle, et/ou silanol, en particulier des groupes terminaux vinyle, un composé organoplatinique, un polyméthylhydrogénosiloxane, et éventuellement des charges.

10. Procédé selon la revendication 8 ou 9, **caractérisé en ce que** la réticulation à l'étape iii. est effectuée entre 60 et 180 °C, en particulier entre 70 et 150 °C ou entre 80 et 130 °C.

11. Procédé selon l'une des revendications 8 à 10, **caractérisé en ce que** la réticulation à l'étape iii. est effectuée pendant une durée allant de 12 s à 10 min, en particulier de 30 s à 5 min, de manière particulièrement préférée de 1 à 2 min.

12. Procédé selon l'une des revendications 8 à 11, **caractérisé en ce que** le procédé comprend, avant l'étape de procédé ii., l'étape suivante :
a. siliconisation du côté du film en matière plastique sur lequel le caoutchouc de silicone liquide est appliqué à l'étape ii ;
et/ou traitement du côté du film en matière plastique sur lequel le caoutchouc de silicone liquide est appliqué à l'étape ii. avec une couche d'apprêt.

13. Utilisation d'un film revêtu selon l'une des revendications 1 à 7 ou d'un film revêtu fabriqué selon un procédé selon l'une des revendications 8 à 12 pour l'amélioration des propriétés antigraffiti, antiadhérentes et/ou de déperlance d'une surface.

14. Utilisation selon la revendication 13, **caractérisée en ce que** la surface est une surface en métal, en matière plastique, en bois et/ou en matériau composite, en particulier est le côté avant d'un panneau de signalisation.

15. Panneau de signalisation, dans lequel un film revêtu selon l'une des revendications 1 à 7 ou un film revêtu fabriqué selon un procédé selon l'une des revendications 8 à 12 est appliqué au moins sur le côté avant du panneau de signalisation de telle sorte que le revêtement, vu du panneau de signalisation, forme la couche la plus extérieure.
